# EUROPÄISCHE PATENTSCHRIFT

(11) **EP 1 503 906 B1**
(45) Veröffentlichungstag und Bekanntmachung des Hinweises auf die Patenterteilung: **23.11.2011**
(21) Anmeldenummer: 03718768.9
(22) Anmeldetag: 17.04.2003
(51) Int. Cl.: B42D 15/10

(54) **OPTISCH VARIABLES ELEMENT MIT PARTIELLEM TRANSPARENTEM ELEMENT**
OPTICALLY VARIABLE ELEMENT COMPRISING A PARTIALLY TRANSPARENT ELEMENT
ELEMENT OPTIQUEMENT VARIABLE COMPORTANT UN ELEMENT PARTIEL TRANSPARENT

(30) Priorität: 14.05.2002 EP 02010729
(43) Veröffentlichungstag der Anmeldung: 09.02.2005
(73) Patentinhaber: Leonhard Kurz Stiftung & Co. KG, 90763 Fürth (DE)
(72) Erfinder: WILD, Heinrich, 91074 Herzogenaurach (DE); BREHM, Ludwig, 91352 Adelsdorf (DE)
(74) Vertreter: Zinsinger, Norbert
(86) Internationale Anmeldenummer: PCT/EP2003/004022
(87) Internationale Veröffentlichungsnummer: WO 2003/095227

(56) Entgegenhaltungen:
- WO-A-01/03945
- DE-C- 4 334 848

## Beschreibung

Die Erfindung betrifft ein optisch variables Element, insbesondere ein optisch variables Sicherungselement zur Sicherung von Banknoten, Kreditkarten u.dgl., das einen Dünnfilm zur Erzeugung von Farbverschiebungen mittels Interferenz und/ oder eine reflektierende Schicht aufweist. Die Erfindung betrifft weiter ein Sicherheitsprodukt und eine Folie, insbesondere eine Prägefolie oder Laminierfolie, die ein solches optisch variables Element aufweist.

Optisch variable Elemente werden häufig dazu genutzt, um das Kopieren und den Missbrauch von Dokumenten oder Produkten zu erschweren und wenn möglich zu verhindern. So finden optisch variable Elemente häufig Verwendung zur Sicherung von Dokumenten, von Banknoten, von Kreditkarten, von Geldkarten u.dgl.

Um das Kopieren von optisch variablen Elementen zu erschweren, ist es bekannt, ein optisch variables Element mit einer Dünnfilm-Schichtfolge auszustatten, die blickwinkelabhängig Farbverschiebungen mittels Interferenz erzeugen.

In WO 01/03945 A1 wird ein Sicherheitsprodukt beschrieben, das ein durchsichtiges Substrat aufweist, auf dessen einen Seite ein Dünnfilm aufgetragen ist, der eine wahrnehmbare Farbverschiebung abhängig von der Blickwinkeländerung erzeugt. Der Dünnfilm besteht aus einer Absorptionsschicht, die auf dem durchsichtigen Substrat aufgebracht ist und aus einer Dielektrizitätsschicht, die auf der Absorptionsschicht aufgebracht ist. Die Absorptionsschicht enthält ein Material, das aus einem der folgenden Materialien oder aus einer Kombination dieser Materialien aufgebaut ist: Chrom, Nickel, Palladium, Titan, Kobalt, Eisen, Wolfram, Molybdän, Eisenoxid oder Kohlenstoff. Die Dielektrizitätsschicht besteht aus einem der folgenden Materialien oder einer Kombination der folgenden Materialien: Silizium, Aluminiumoxid, Magnesiumfluorid, Aluminiumfluorid, Bariumfluorid, Kalziumfluorid oder Lithiumfluorid.

Zur weiteren Erhöhung der Kopiersicherheit ist auf die der Dünnfilmschichtfolge gegenüberliegenden Seite des transparenten Substrates ein Diffraktionsmuster aufgeprägt. Dieses Diffraktionsmuster wirkt als Beugungsgitter, so dass sich mittels dieses zweidimensionalen Musters z.B. die Illusion eines dreidimensionalen Bildes für den Betrachter erzeugen lässt.

Weiter wird vorgeschlagen, das diffraktive Muster auf der Seite des transparenten Substrates aufzuprägen, auf die auch die Dünnfilmschichten aufgetragen werden.

Durch diese beiden Ausführungsformen eines optisch variablen Elementes wird erreicht, dass sich an jeder Stelle des optisch variablen Elementes die durch die Dünnfilmschichten erzeugten optischen Effekte und die durch das diffraktive Muster erzeugten optischen Effekte überlagern und sich somit insgesamt ein optischer Effekt ergibt, der schwer nachzuahmen und zu kopieren ist.

Die Erfindung geht nun von einem optisch variablen Element aus, wie es in WO 02/00445 A1 beschrieben ist.

Das optisch variable Element besteht hier aus mehreren Schichten, die durchgängig übereinander angeordnet sind. Das optisch variable Element weist zum einen einen Dünnfilm auf, der den bereits oben beschriebenen optischen Effekt eines blickwinkelabhängigen Farbwechsels erzeugt. Weiter weist das optisch variable Element eine Replizierschicht auf, in die eine Reliefstruktur eingeprägt ist. Diese Reliefstruktur erzeugt einen weiteren optischen Effekt, nämlich den bereits oben beschriebenen Beugungseffekt, mittels dem sich Hologramme und dergleichen darstellen lassen. Fertigungstechnisch werden hierbei zuerst die Dünnfilmschichten auf die Replizierschicht aufgebracht und sodann die Reliefstruktur aufgeprägt.

Alternativ hierzu wird in WO 02/00445 A1 beschrieben, dass der durch die Dünnfilmstruktur erzeugte optische Effekt und der durch die Reliefstruktur erzeugte optische Effekt voneinander entkoppelt werden. Hierzu werden zwei Vorgehensweisen vorgeschlagen.

Zum einen wird vorgeschlagen, eine opake Schicht zwischen der Reliefstruktur, die mittels Beugung ein holographisches Bild erzeugt, und dem Dünnfilm, der einen Farbwechseleffekt erzeugt, aufzubringen. Mittels dieser opaken Schicht wird die Reliefstruktur von der Dünnfilmstruktur abgeschirmt. Die zweite Möglichkeit besteht darin, zwei oder mehr Schichten eines im Wesentlichen transparenten Materials zwischen die ein holographisches Bild durch Beugung erzeugende Reliefstruktur und den Dünnfilmschichten anzuordnen. Diese Schichten können ein oder mehrere hochbrechende Schichten und eine Klebeschicht umfassen. Mittels dieser Schichten wird die Reflexion und somit die Lichtstärke im Bereich der ein holographisches Bild erzeugenden Reliefstruktur erhöht.

Ein solches variables optisches Element kann hierbei wie folgt hergestellt werden: Zuerst wird ein Muster in eine Holographiefolie eingeprägt. Diese Folie wird sodann bereichsweise mit einer Metallschicht versehen. Sodann werden nacheinander die Dünnfilmschichten aufgedampft. Als letztes wird eine vollflächige Metallschicht aufgebracht.

Eine weitere Möglichkeit besteht darin, eine vorfabrizierte Dünnfilmschichtfolge mit einem beprägbaren Lack zu versehen und in diesen Lack dann die Reliefstruktur einzuprägen. Weiter wird vorgeschlagen, solche vorgefertigten Dünnfilmschichten mit vorgefertigten Mikrostrukturen zu verkleben.

WO 02/00445 A1 beschreibt so, entweder Sicherheitselemente einzusetzen, in denen der durch diffraktive Strukturen erzeugte optische Effekt und der durch Dünnfilmstrukturen erzeugte optische Effekt miteinander gekoppelt sind, oder Sicherheitselemente einzusetzen, in denen der durch diffraktive Strukturen erzeugte optische Effekt und der durch Dünnfilmschichten erzeugte optische Effekt voneinander entkoppelt sind. DE 43 34 848 C1 offenbart ein optisch variables Element gemäß dem Oberbegriff von Anspruch 1.

Der Erfindung liegt nun die Aufgabe zugrunde, das Nachahmen und Kopieren von optisch variablen Elementen zu erschweren und somit die Fälschungssicherheit von Sicherheitsprodukten zu verbessern.

Diese Aufgabe wird gelöst von einem optisch variablen Element gemäß Anspruch 1. Diese Aufgabe wird weiter gelöst von einem Sicherheitsprodukt und von einer Folie, insbesondere einer Prägefolie oder Laminierfolie, die ein derartiges optisch variables Element aufweist.

Durch die Erfindung wird der Vorteil erreicht, dass sich ein erfindungsgemäßes optisch variables Element wesentlich schwerer kopieren lässt, als die im Stand der Technik bekannten optisch variablen Elemente. Dadurch erhöht sich die Fälschungssicherheit von mit einem erfindungsgemäß ausgestalteten optisch variablen Element ausgestatteten Sicherheitsprodukten erheblich. Insbesondere gegenüber sandwichartig aufgebauten Flächenelementen ist die Fälschungssicherheit hierbei weit erhöht.

So kann beispielsweise das in WO 02/00445 A1 beschriebene optisch variable Element - wie in WO 02/00445A1 als Möglichkeit der Herstellung beschrieben - dadurch nachgeahmt werden, dass eine vorfabrizierte Dünnfilmfolie mit einem Prägestempel bearbeitet wird, mit dem eine diffraktive Struktur in die Dünnfilmfolie eingeprägt wird. Dies ist bei einem erfindungsgemäß ausgestallten optisch variablen Element nicht mehr möglich: Das partielle Aufbringen eines partiellen Fensters, das von einer partiellen reflektierenden Schicht und/oder einem partiellen Dünnfilmelement umschlossen wird, erfordert einen hohen Technologieaufwand. Das so erzeugte partielle Dünnfilmelement stellte gegenüber einer vorfabrizierten Dünnfilmfolie ein individualisiertes Element dar, so dass ausgehend von einer vorfabrizierten Dünnfilmschichtfolge eine Nachahmung des optisch variablen Elements nicht mehr möglich ist.

Weiterer Vorteile zu bisherigen Einzeldarstellungen oder übereinanderliegenden Flächenelementen bestehen in der besseren optischen Integration in das zu schützende Gesamtelement, das Bestehen der Möglichkeit, unter dem optisch variablen Element angeordnete Muster, Schriften und Codes gezielt sichtbar zu machen und so ein zusätzliches Sicherheitsmerkmal zu schaffen, die gezielte geometrische Anordnung von funktionellen Fenstern (Maschinenlesbarkeit, Personaldaten usw.) und die besser abstimmbare Wahl der physikalisch chemischen Eigenschaften der partiell angeordneten Einzelelemente (Korrosion, Zwischenschichthaftung u.ä.).

Vorteilhafte Ausgestaltungen der Erfindung sind in den Unteransprüchen bezeichnet.

Es ist zweckmäßig, dass das optisch variable Element ein oder mehrere weitere Schichten aufweist, die sich über den Flächenbereich des transparenten Fensters sowie über den Flächenbereich des partiellen Dünnfilmelements und/ oder der partiellen reflektierenden Schicht erstrecken. Das optisch variable Element weist so vorzugsweise eine Replizierschicht, eine Schutzlackschicht und/ oder eine Klebeschicht auf, die sich über den Flächenbereich des transparenten Fensters sowie über den Flächenbereich des partiellen Dünnfilmelements und/ oder der partiellen reflektierenden Schicht erstreckt. Diese Schichten können hierbei auch vollflächig ausgestaltet sein.

Die Fälschungssicherheit kann dadurch erhöht werden, das im Flächenbereich des transparenten Fensters eine diffraktive Struktur, insbesondere zur Erzeugung von Beugungseffekten aufgebracht wird. Mittels einer solchen diffraktiven Struktur können beispielsweise Hologramme erzeugt werden. Es ist möglich, dass diese diffraktive Struktur den gesamten Flächenbereich des transparenten Fensters einnimmt. Das Nachahmen dieses Sicherheitsmerkmals wird jedoch erschwert, wenn die diffraktive Struktur nur einen Teil des Flächenbereiches des transparenten Fensters einnimmt und damit in Bezug auf das transparente Fenster ein partielles diffraktives Element bildet. Durch dieses partielle Aufbringen werden Passer-Ungenauigkeiten, die unter Umständen im Grenzbereich zwischen dem transparenten Fenster und den umgebenden partiellen Elementen verschwimmen können, für den Betrachter leichter erkennbar.

Eine Nachahmung des optisch variablen Elements wird weiter dadurch erheblich erschwert, dass das optisch variable Element mit einer diffraktiven Struktur versehen wird, die sich sowohl über einen Flächenbereich des transparenten Fensters als auch über einen Flächenbereich des partiellen Dünnfilmelements und/ oder der partiellen reflektierenden Schicht erstreckt. Die diffraktive Struktur erstreckt sich so über die Grenzlinie zwischen dem transparenten Fenster und dem oder den umschließenden partiellen Elementen. Wird bei einem Nachahmungsversuch versucht, mittels eines Prägestempels eine sich über diese Grenzlinie erstreckende diffraktive Struktur aufzuprägen, so wird aufgrund des unterschiedlichen Schichtaufbaus dieser unterschiedlichen partiellen Elemente (transparentes Fenster, partielle reflektierende Schicht, partielles Dünnfilmelement) die diffraktive Struktur unterschiedlich tief eingeprägt. Damit wird zumindest diese Grenzlinie innerhalb des von der diffraktiven Struktur dargestellten Hologramms, beispielsweise durch einen in dem Hologramm entstehenden Fehler, erkennbar. Ein solcher Nachahmungsversuch ist für den Betrachter somit klar erkennbar und kann als Fälschung identifiziert werden.

Dieser Effekt kann dadurch verstärkt werden, dass zwischen dem Flächenbereich des transparenten Fensters und dem der reflektierenden Schicht und/ oder dem des partiellen Dünnfilmelements Niveauunterschiede bestehen, das optisch variable Element also in diesen Flächenbereichen eine unterschiedliche Gesamtschichtdicke aufweist. Auch durch die Wahl der in diesen Bereichen gewählten Materialien (z. B. unterschiedliche Härte) und durch die Schicht-Komposition kann dieser Effekt verstärkt werden.

Vorteilhaft ist, dass das transparente Fenster ein partielles transparentes Element mit speziellen optischen Eigenschaften aufweist. Dadurch wird erreicht, dass unterschiedliche partielle Elemente (partielles transparentes Element, partielles Dünnfilmelement, partielle reflektierende Schicht) aufeinanderfolgen. Dies erschwert, wie bereits oben dargelegt, die Nachahmung des optisch variablen Elements gegenüber den bekannten sandwichartig aufgebauten optisch variablen Sicherheitselementen erheblich. Das partielle transparente Element kann als zusätzliches Sicherheitsmerkmal eine eingefärbte Transmissionsschicht aufweisen oder streuende Eigenschaften besitzen.

Eine mit fertigungstechnischen Vorteilen verbundene Möglichkeit, ein partielles transparentes Element auszugestalten, besteht darin, dass im Flächenbereich des partiellen transparenten Elements, also im transparenten Fenster, eine Absorptionsschicht aber keine Distanzschicht aufgebracht wird. Diese Vorteile werden weiter auch dadurch erzielt, indem im Flächenbereich des partiellen transparenten Elements eine Distanzschicht, aber keine Absorptionsschicht aufgebracht wird.

Es ist zweckmäßig, das partielle Dünnfilmelement aus einer Absorptionsschicht und eine Distanzschicht aufzubauen. Weiter ist es möglich, das partielle Dünnfilmelement aus einer größeren Zahl von Schicht aufzubauen, die wechselseitig unterschiedliche Brechungsindizes besitzen.

Die Fälschungssicherheit kann weiter dadurch erhöht werden, dass das partielle Dünnfilmelement eine reflektierende Schicht, vorzugsweise eine Metallschicht, aufweist. Dadurch wird die Erkennbarkeit des partiellen Dünnfilmelements verbessert.

Alternativ besteht auch die Möglichkeit, das partielle Dünnfilmelement mit einer Transmissionsschicht zu versehen. In diesem Fall ist es besonders vorteilhaft, diese Transmissionsschicht einzufärben und so ein zusätzliches Sicherheitsmerkmal zu schaffen.

Das Nachahmen des optisch variablen Elements kann weiter dadurch erschwert werden, dass das partielle Dünnfilmelement mit einer partiellen reflektierenden Schicht, insbesondere einer Metallschicht, versehen wird, die den Flächenbereich des partiellen Dünnfilmelements nur partiell abdeckt. Neben der damit verbundenen Erhöhung der Fälschungssicherheit lassen sich auf diese Weise auch interessante dekorative Effekte erzielen. Der zur Gestaltung eines optisch variablen Elements zur Verfügung stehende Formenschatz wird somit vergrößert.

Diese Vorteile lassen sich auch dadurch erzielen, dass das partielle Dünnfilmelement mit einer partiellen diffraktiven Struktur versehen wird, die den Flächenbereich des partiellen Dünnfilmelements nur partiell abdeckt.

Diese beiden Maßnahmen, nämlich partielle reflektierende Schicht und partielle diffraktive Struktur, können auch parallel verwirklicht werden.

Es ist möglich, die Gestaltungselemente "partielles transparentes Element mit partieller reflektierende Schicht", "partielles transparentes Element mit partieller diffraktiver Struktur" und "partielles transparentes Element mit partiellem Dünnfilmelement" beliebig miteinander zu kombinieren. Ein erfindungsgemäßes optisch variables Element kann somit eine Vielzahl von Kombinationen wertvoller Sicherheitsmerkmale aufweisen und bietet eine Vielzahl von ansprechenden Gestaltungsmerkmalen.

Im Folgenden wird die Erfindung anhand von mehreren Ausführungsbeispielen unter zu Hilfenahme der beiliegenden Zeichnungen beispielhaft erläutert.
- Fig. 1: zeigt eine Darstellung eines Schnitts durch ein optisch variables Element.
- Fig. 2a: zeigt eine Darstellung eines erfindungsgemäßen optisch variablen Elements gemäß einem ersten Ausführungsbeispiel.
- Fig. 2b: zeigt eine Darstellung eines erfindungsgemäßen optisch variablen Elements gemäß einem zweiten Ausfiihrungsbeispiel.
- Fig. 2c: zeigt eine Darstellung eines erfindungsgemäßen optisch variablen Elements gemäß einem dritten Ausführungsbeispiel.
- Fig. 3: zeigt eine Darstellung eines Schnitts durch ein erfindungsgemäßes optisch variables Element für ein weiteres Ausführungsbeispiel der Erfindung.
- Fig. 4: zeigt eine Darstellung eines Schnitts durch ein erfindungsgemäßes optisch variables Element für ein weiteres Ausführungsbeispiel der Erfindung.
- Fig. 5a: zeigt eine Darstellung eines Schnitts durch ein erfindungsgemäßes optisch variables Element für ein weiteres Ausführungsbeispiel der Erfindung.
- Fig. 5b: zeigt eine Darstellung eines Schnitts durch ein erfindungsgemäßes optisch variables Element für ein weiteres Ausführungsbeispiel der Erfindung.
- Fig. 6: zeigt eine Darstellung eines Schnitts durch ein erfindungsgemäßes optisch variables Element für ein weiteres Ausführungsbeispiel der Erfindung.
- Fig. 7: zeigt eine Darstellung eines Schnitts durch ein erfindungsgemäßes optisch variables Element für ein weiteres Ausführungsbeispiel der Erfindung.

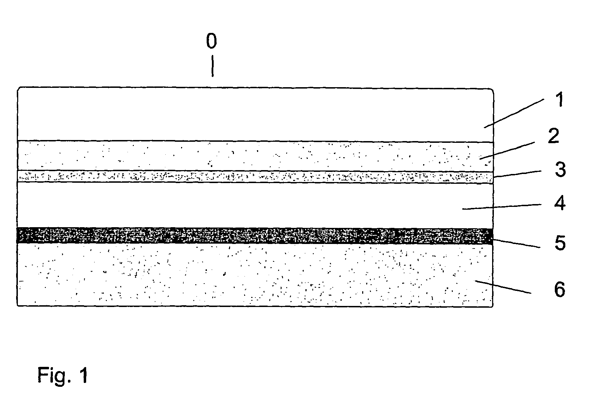

Fig. 1 zeigt den prinzipiellen Aufbau eines optisch variablen Elements 0.

Das optisch variable Element 0 ist dazu bestimmt, auf ein Sicherheitsprodukt, beispielsweise auf eine Banknote, eine Kreditkarte, eine Geldkarte oder ein Dokument, aufgebracht zu werden. Weiter besteht die Möglichkeit, dass das optisch variable Element dazu bestimmt ist, als Sicherheits- oder Echtheitskennzeichnung auf einen Gegenstand, beispielsweise auf eine CD, oder auf eine Verpackung aufgebracht zu werden.

Das optisch variable Element 0 kann vielfältige Formen einnehmen. Das optisch variable Element 0 kann so beispielsweise ein Sicherheitsfaden sein, der dazu bestimmt ist, auf eine der oben spezifizierten Objekte aufgebracht zu werden.

Fig. 1 zeigt einen Träger 1 und fünf Schichten 2 bis 6. Das optisch variable Element 0 wird von den Schichten 2 bis 6 gebildet. Die Schicht 2 ist eine Schutzlack- und/oder Ablöseschicht, die Schicht 3 ist eine Absorptionsschicht, die Schicht 4 ist eine Distanzschicht. Die Schicht 5 ist eine Metallschicht oder eine HRI-Schicht (HRI = High Refraction Index). Die Schicht 6 ist eine Klebeschicht.

Der Träger 1 besteht beispielsweise aus PET. Der Träger dient dem fertigungstechnischen Aufbau des optisch variablen Elements. Beim oder nach dem Aufbringen des optisch variablen Elements auf das zu sichernde Objekt wird der Träger 1 entfernt. In Fig. 1 wird das optisch variable Element somit in einem Stadium gezeigt, in dem es Teil einer Folie, beispielsweise einer Prägefolie oder einer Laminierfolie ist.

Im Fall, dass das optisch variable Element 0 Teil einer Laminierfolie ist, weist die Schicht 2 eine Haftvermitttungsschicht auf.

Ein Dünnfilm zeichnet sich prinzipiell durch einen Interferenzschichtenaufbau aus, der blickwinkelabhängige Farbverschiebungen erzeugt. Er kann als reflektives Element, mit zum Beispiel hochreflektierenden Metallschichten oder als transmissives Element mit einer transparenten optischen Trennschicht (höherer Brechungsindex (HRI) oder niederer Brechungsindex (LRI)) zu den angrenzenden Schichten aufgebaut sein. Der Basisaufbau des Dünnfilms weist eine Absorptionsschicht (vorzugsweise mit 30% bis 65% Transmission), eine transparente Distanzschicht als farbwechselerzeugende Schicht (z.B. λ-Viertel- oder λ-Halbe-Schicht) und eine Metallschicht als reflektierende oder eine optische Trennschicht als transmittierende Schicht auf.

Die Schichten 3, 4 und 5, also die Absorptionsschicht, die Distanzschicht und die Metallschicht oder HRI Schicht bilden einen Dünnfilm, der blickwinkelabhängige Farbverschiebungen mittels Interferenz erzeugt. Die von dem Dünnfilm erzeugten Farbverschiebungen liegen hierbei vorzugsweise im Bereich des für einen menschlichen Betrachter sichtbaren Lichts. Weiter ist dieser Dünnfilm als partielles Dünnfilmelement ausgebildet, das den Flächenbereich des optisch variablen Elements 0 nur bereichsweise und musterförmig bedeckt.

Besteht die Schicht 5 aus einer reflektierenden Schicht, beispielsweise aus Aluminium, so ist die Schichtdicke der Distanzschicht 4 so zu wählen, dass die λ/4 Bedingung erfüllt wird. Besteht die Schicht 5 aus einer transmissiven Schicht, so hat die Distanzschicht 4 die λ/2 Bedingung zu erfüllen.

Es ist möglich, dass das partielle Dünnfilmelement aus einer Abfolge von hoch und niedrig brechenden Schichten aufgebaut ist. Beispielsweise kann das partielle Dünnfilmelement aus 3 bis 9 solcher Schichten (ungeradzahlige Anzahl von Dünnfilmschichten) oder aus 2 bis 10 solcher Schichten (geradzahlige Anzahl von Dünnfilmschichten) aufgebaut sein. Je höher die Anzahl der Schichten ist, um so schärfer lässt sich die Wellenlänge für den Farbwechseleffekt einstellen.

Beispiele üblicher Schichtdicken der einzelnen Schichten des partiellen Dünnfilmelements und Beispiele von Materialien, die für die Schichten des partiellen Dünnfilmelements prinzipiell verwendbar sind, werden in WO 01/03945, Seite 5/ Zeile 30 bis Seite 8/ Zeile 5 offenbart.

Die Schicht 5 ist als partielle Metallschicht oder HRI Schicht ausgebildet. Als Materialien für die Schicht 5 kommen beispielsweise Al, Ag, Cu, Au oder eine Kombination dieser Materialien in Frage.

Weiter ist es möglich, dass die Schicht 5 eine strukturierte Oberfläche aufweist. Sie kann so eine diffraktive Struktur, eine refraktive Struktur (Linsen) oder makroskopische Strukturen aufweisen. Weiter kann sie auch eine unstrukturierte spiegelnde oder streuende Oberfläche aufweisen.

Das optisch variable Element 0 weist so ein partielles Dünnfilmelement, das von den lediglich partiell vorhandenen Schichten 3, 4 und 5 gebildet wird und/ oder eine partielle reflektierende Schicht 5 auf. Diese partiellen Elemente umschließen den Flächenbereich eines in dem optisch variablen Element 0 geformten transparenten Fensters, in dem die Schichten 3, 4 und 5 fehlen.

Es ist prinzipiell möglich, auf eine oder auf mehrere der in Fig. 1 gezeigten Schichten zu verzichten. Weiter kann das optisch variable Element 0 noch ein oder mehrere weitere Schichten aufweisen.

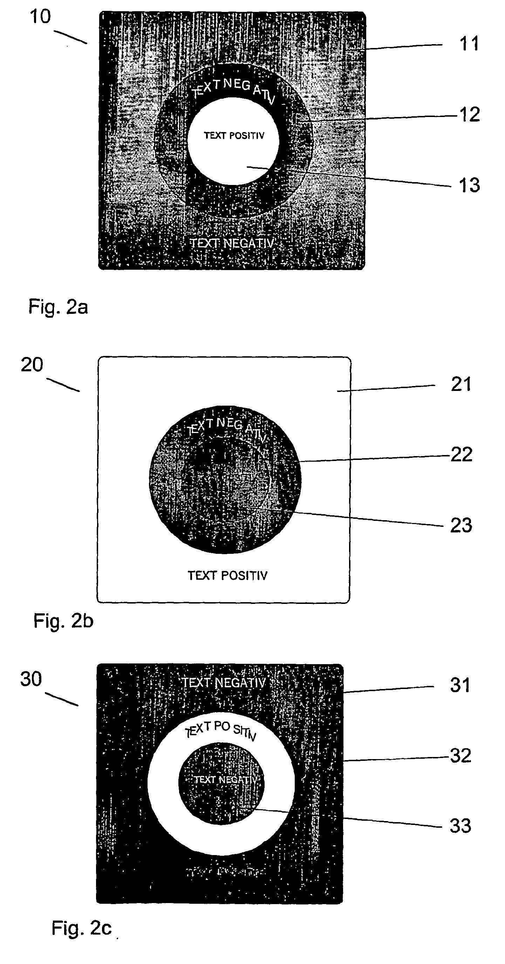

Fig. 2a bis Fig. 2c zeigen drei optisch variable Elemente 10, 20 bzw. 30. Das optisch variable Element 10 weist drei Flächenbereiche 11 bis 13, das optisch variable Element 20 drei Flächenbereiche 21 bis 23 und das optisch variable Element 30 drei Flächenbereiche 31 bis 33 auf.

Die Flächenbereiche 12, 23 und 31 der optisch variablen Elemente 10, 20 bzw. 30 sind jeweils von einem partiellen Dünnfilmelement bedeckt. Wie aus den Figuren 2a bis 2c ersichtlich, ist das partielle Dünnfilmelement jeweils bereichsweise und musterförmig geformt.

Es ist hierbei möglich, dass das jeweilige partielle Dünnfilmelement transmissiv oder reflektiv ausgestaltet ist. Durch eine partielle, musterförmige sowohl transmissive als auch reflektive Ausgestaltung innerhalb des jeweiligen Flächebereichs sind weitere interessante Effekte erreichbar. Weiter können die Flächenbereiche 12, 23 und 31 auch mit einer diffraktiven Struktur versehen sein.

Die Flächenbereiche 11, 22 und 33 der optisch variablen Elemente 10, 20 bzw. 30 sind jeweils mit einer partiellen Metallisierung bedeckt. Auch diese Flächenbereiche können mit einer diffraktiven Struktur versehen sein.

In den Flächenbereichen 13, 21 und 32 der optisch variablen Elemente 10, 20 bzw. 30 ist jeweils ein transparentes Fenster sichtbar. Die transparenten Fenster weisen jeweils ein partielles transparentes Element auf. Dieses besitzt transparente oder transmissive Eigenschaften (Klarlack-Kompositionen, oxidische, teilmetallisierte, streuende transmissive organische und anorganische Kompositionen). Auch diese Flächenbereiche können mit einer diffraktiven Struktur versehen sein. Das transparente Element kann diffraktive Strukturen, refraktive Strukturen (z. B. Mikro-Linsen), makroskopisch Strukturen (größer 5 µm) oder eine streuende Oberfläche aufweisen. Hierbei ist es besonders vorteilhaft, dass sich diese diffraktive Struktur, wie bereits oben erläutert, in die angrenzenden Flächenbereiche 12, 22 bzw. 31 und 33 erstreckt. Weiter ist es auch möglich, das das transparente Element eingefärbt ist.

Es ist möglich, dass das transparente Fenster nicht, wie in den Figuren 2a bis 2b dargestellt, von einem einzigen partiellen Element umschlossen wird. Es ist vielmehr auch möglich, dass zwei oder mehr partielle Elemente (partielle reflektierende Schicht, partielles Dünnfilmelement) gemeinsam das transparente Fenster umschließen. So ist es beispielsweise möglich, dass in Fig. 2c die untere Hälfte der Fläche 31 von einem partiellen Dünnfilmelement und die obere Hälfte der Fläche 31 von einer partiellen reflektierenden Schicht gebildet wird.

Hervorzuheben ist, dass die schematisch dargestellten Elementanordnungen der Figuren 2a bis 2c alle zueinander im Register ausgeführt werden können und ohne Einschränkung der Allgemeinheit, sowohl graphische Bildelemente, alphanumerische und geometrische Zeichen, Strichcodes und Zufallsmuster und deren Kombinationen umfassen können.

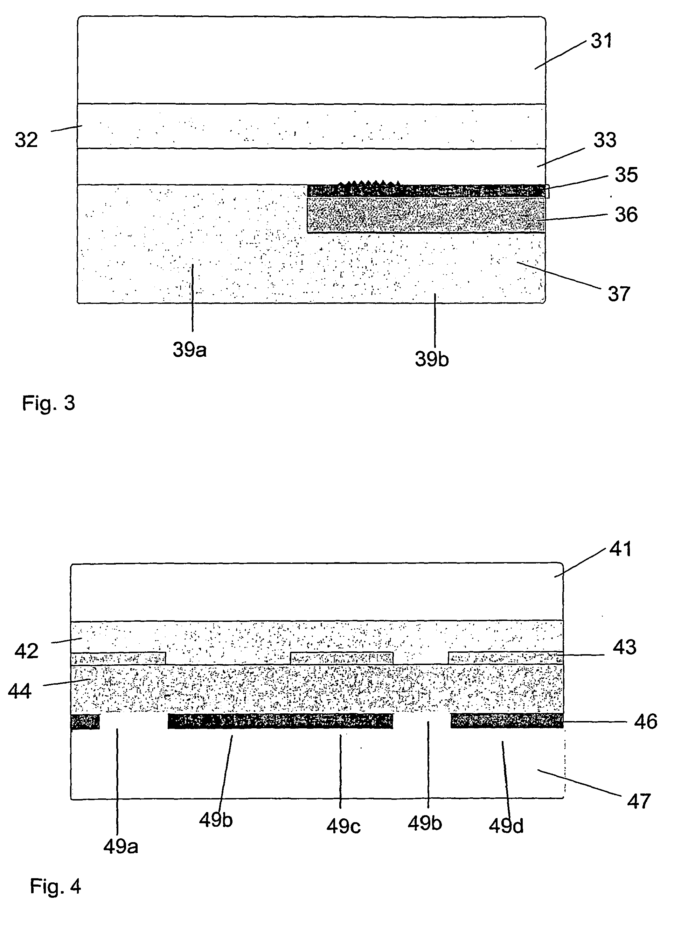

Fig. 3 verdeutlicht eine Möglichkeit, ein optisch variables Element aufzubauen, das mit einem transparenten Fenster versehen ist.

Fig. 3 zeigt einen Träger 31, fünf Schichten 32 bis 37 und zwei Flächenbereiche 39a und 39b.

Die Schicht 32 ist eine Schutzlack- und/oder Ablöseschicht, die Schicht 33 ist eine Replizierschicht, die von einem Replikationslack gebildet wird. Die Schicht 35 ist eine Metallschicht oder eine HRI-Schicht (HRI = High Refraction Index). Die Schicht 36 wird von einem Ätzresist gebildet. Die Schicht 37 ist eine Klebeschicht.

Zur Herstellung dieses Schichtaufbaus werden auf dem Träger 31 die Schutzlack- und Ablöseschicht 32, die Replizierschicht 33 und die Metallschicht 35 vollflächig aufgetragen. Sodann wird die Schicht 35 mittels eines Prägewerkzeuges partiell mit diffraktiven Strukturen versehen. Anschließend wird die Metallschicht 35 mit einem Ätzresist bedruckt, so dass die lediglich partiell ausgeformte Schicht 36 geformt wird.

Im Folgende wird die nicht von dem Ätzresist bedeckte Fläche durch Ätzen entfernt.

Alternativ ist es auch möglich, die Metallschicht 5 durch Ablationsverfahren wie Laser-Ablation, Funkenerosion, Plasma- oder Ionen-Beschuß zu entfernen oder zu demetallisieren. Durch solche Ablationsverfahren ist es möglich, digital gespeicherte Bilder, Texte und Codes zu übertragen.

Die so zwischen den partiellen Schichten 35 und 36 geschaffenen Zwischenräume bilden ein transparentes Fenster. Weiter kann in die so zwischen den partiellen Schichten 35 und 36 geschaffenen Zwischenräume ein partielles Dünnfilmelement eingebracht werden, das nur Teilbereiche der Zwischenräume bedeckt. Die Schichten des partiellen Dünnfilmelements können hierbei durch Bedampfen mit entsprechend ausgeformten Bedampfungsmasken oder durch das Aufdrucken der Schichten in dem Bereich der Zwischenräume aufgebracht werden.

Fig. 4 zeigt ein optisch variables Element, bei dem der Flächenbereich eines transparenten Fensters eine Distanzschicht, aber keine Absorptionsschicht aufweist.

Fig. 4 zeigt einen Träger 41, fünf Schichten 42 bis 47 und mehrere Flächenbereiche 49a bis 49d.

Die Schicht 42 ist eine Schutzlack- und/oder Ablöseschicht, die Schicht 43 ist eine Absorptionsschicht. Die Schicht 44 ist eine Distanzschicht. Die Schicht 46 ist eine Metallschicht oder eine HRI-Schicht (HRI = High Refraction Index). Die Schicht 47 ist eine Klebeschicht.

Zur Herstellung dieses Schichtaufbaus werden auf den Träger 41 die Schutzlack- und Ablöseschicht 42 und die Absorptionsschicht 43 vollflächig aufgetragen. Die Absorptionsschicht 43 kann hierbei aufgedampft oder durch ein Druckverfahren aufgetragen werden.

Anschließend wird die Absorptionsschicht partiell in den Flächenbereichen 49b entfernt.

Diese partielle Entfernung der Absorptionsschicht erfolgt durch positiv Ätzung oder negativ Ätzung. So kann bei der Direktätzung ein Ätzmittel durch ein Druckverfahren, beispielsweise mittels einer Walze oder durch Siebdruck, als Muster aufgetragen werden. Weiter kann eine Ätzmaske aufgebracht werden, die nach dem Ätzprozess durch einen Waschvorgang entfernt wird.

Weiter ist es möglich, die Absorptionsschicht durch ein Ablationsverfahren wie Laser-Ablation, Funkenerosion, Plasma- oder Ionen-Beschuß zu entfernen. Durch solche Applikationsverfahren ist es möglich, digitale gespeicherte Bilder, Texte und Codes zu übertragen.

Anstelle des vollflächigen Auftragens der Absorptionsschicht ist es auch möglich, die Absorptionsschicht nur partiell auf die Schicht 42 aufzubringen. Dies kann durch Bedampfung mittels musterförmig gestalteter Bedampfungsmasken oder durch ein entsprechend musterförmiges Aufdrucken der Absorptionsschicht 43 auf die Schicht 42 erfolgen.

Auf die partiell geformte Absorptionsschicht 43 wird nun die Distanzschicht 44 vollflächig aufgetragen. Das Auftragen der Absorptionsschicht kann durch Bedampfung oder durch den vollflächigen Aufdruck der Absorptionsschicht erfolgen.

Die Flächenbereiche 49a sind nach diesem Vorgang mit einem Dünnfilm bestehend aus der Absorptionsschicht 43 und der Distanzschicht 44 bedeckt. Dieser Dünnfilm erzeugt (nach dem Auftragen der weiteren Schichten, die als optische Trennschichten wirken) bei einem entsprechenden Lichteinfall blickwinkelabhängige Farbverschiebungen mittels Interferenz. In den Flächenbereichen 49b fehlt die Absorptionsschicht 43, so dass dort solche Farbverschiebungen nicht erzeugt werden können.

Es ist weiter möglich, nicht nur die Absorptionsschicht 43 sondern auch die Distanzschicht 44 nur partiell auf die Absorptionsschicht 43 aufzubringen oder partiell zu entfernen:
Es besteht zum einen die Möglichkeit, auf die partiell ausgeformte Absorptionsschicht 43 die Distanzschicht 44 vollflächig aufzutragen und dann anschließend die Distanzschicht durch eines der oben beschriebenen Verfahren (positiv Ätzung, negativ Ätzung, Ablation) im Register zu der partiell ausgeformten Absorptionsschicht zu entfernen.

Weiter besteht die Möglichkeit, die Absorptionsschicht 43 und die Distanzschicht 44 vollflächig aufzutragen und dann beide Schichten gemeinsam durch eines der oben beschriebenen Verfahren (positiv Ätzung, negativ Ätzung, Ablation) zu entfernen.

Weiter besteht die Möglichkeit, die Distanzschicht im Register zu der partiell ausgeformten Absorptionsschicht mittels eines Druckverfahrens aufzudrucken.

Alternativ ist es auch möglich, dass der Flächenbereich des transparenten Fensters eine Absorptionsschicht aber keine Distanzschicht aufweist.

Dies kann dadurch erreicht werden, dass die Absorptionsschicht, beispielsweise durch Bedampfen oder Bedrucken, vollflächig aufgebracht wird. Anschließend wird die Distanzschicht durch ein Druckverfahren nur partiell aufgetragen. Auch hier besteht die Möglichkeit, dass die Distanzschicht vollflächig aufgetragen wird und dann durch eines der oben beschriebenen Verfahren (positiv Ätzung, negativ Ätzung, Ablation) entfernt wird.

Weiter besteht die Möglichkeit, die Distanzschicht oder die Absorptionsschicht durch überdampfen oder Überdrucken derart in ihrer Dicke zu verändern, dass sie ihre Funktion nicht mehr erftillen kann und damit "ausgelöscht" wird.

Auf die derart aufgebrachten und ausgestalteten Schichten 43 und 44 wird nun die Schicht 46 aufgebracht.

Ist die Schicht 46 eine Reflexionsschicht, so besteht sie vorzugsweise aus einem Metall. Dieses Metall kann auch eingefärbt sein. Als Materialien kommen im Wesentlichen Chrom, Aluminium, Kupfer, Eisen, Nickel oder eine Legierung mit diesen Materialien in Frage.

Weiter ist es in diesem Fall möglich, hochglänzende oder reflektierende Metallpigmente aufzutragen, die dann die Reflexionsschicht bilden.

Die Reflexionsschicht 46 wird hierbei nur partiell aufgebracht, so dass der Flächenbereich des transparenten Fensters nicht von der Reflexionsschicht 46 bedeckt ist. Auch hier besteht die Möglichkeit, die Schicht 46 erst vollflächig z. B. durch Bedampfung, aufzutragen und dann durch eines der oben beschriebenen Verfahren (positiv Ätzung, negativ Ätzung, Ablation) zu entfernt. Weiter ist auch ein partielles Bedampfen unter Verwendung einer Bedampfungsmaske möglich. Werden als reflektierende Schicht Metallpigmente verwendet, so kann diese Schicht partiell aufgedruckt werden, wodurch dann eine partielle reflektierende Schicht entsteht.

Ist die Schicht 46 als Transmissionsschicht ausgebildet, so kommen insbesondere Materialien wie Oxide, Sulfide oder Chalkogenide als Materialien für diese Schicht in Frage. Entscheidend für die Wahl der Materialien ist, dass gegenüber den in der Abstandschicht 44 verwendeten Materialien ein Unterschied im Brechungsindex besteht. Dieser Unterschied sollte nicht geringer als 0,2 bis 0,5 sein. Je nach dem für die Distanzschicht 44 verwendeten Materialien wird so ein HRI-Material oder ein LRI-Material für die Schicht 46 eingesetzt. Die Transmissionsschicht kann hierbei auch von einer Klebeschicht gebildet werden, die diese Bedingung bezüglich der Brechungsindizes erfüllt.

Durch partielles Aufbringen der Transmissionsschicht kann weiter ein oben beschriebener "Löscheffekt" erreicht werden. Schließt an die Distanzschicht eine Schicht (z. B. eine Klebeschicht) an, die die oben beschriebene Bedingung bezüglich des Brechungsindizes nicht erfüllt, so wird die optische Dicke der Distanzschicht vergrößert und der Interferenzeffekt tritt nicht mehr ein.

Wie in Fig. 4 dargestellt, liegen durch diese Vorgehensweise in den Flächenbereichen 49a bis 49d unterschiedlich partielle Elemente vor:
Der Flächenbereich 49a weist ein transmissives partielles Dünnfilmelement auf. Der Flächenbereich 49b weist ein partielles reflektierendes Element auf. Die Flächenbereiche 49c weisen ein reflektierendes partielles Dünnfilmelement auf. Der Flächenbereich 49d weist ein partielles transparentes Element auf, das ein transparentes Fenster bildet.

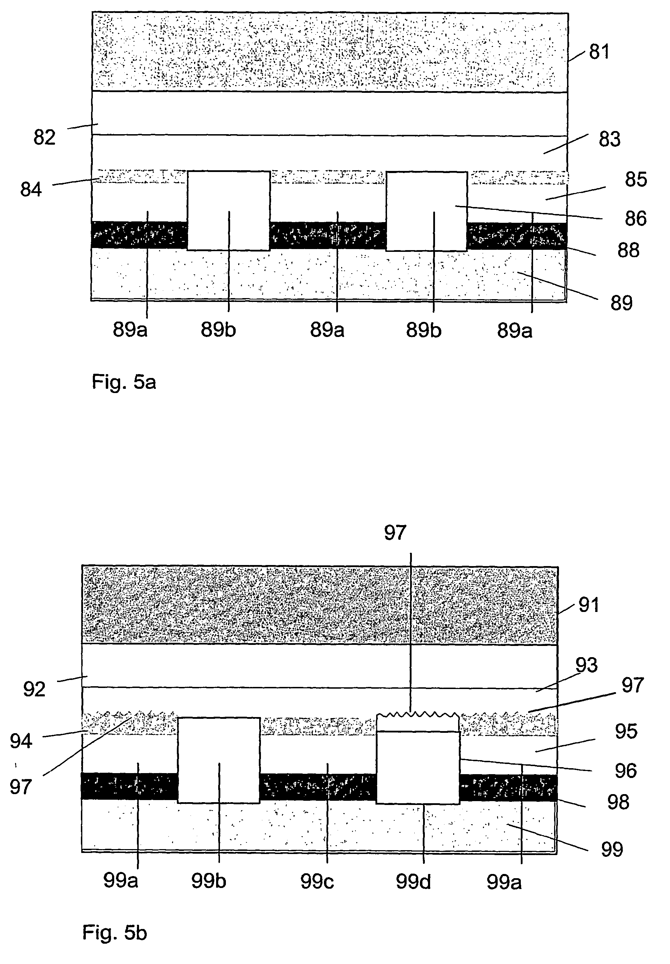

Anhand der Figuren 5a und 5b werden nun verschiedene weitere Möglichkeiten erläutert, ein transparentes partielles Element in einem optisch variablen Element herzustellen und auszugestalten.

Fig. 5a zeigt einen Träger 81, sieben Schichten 82 bis 89 und mehrere Flächenbereiche 89a und 89b. Die Schicht 82 ist eine Schutzlack- und/oder Ablöseschicht. Die Schicht 83 ist eine Replikationsschicht. Auf diese Schicht könnte hier auch verzichtet werden. Die Schicht 84 ist eine Absorptionsschicht. Die Schicht 86 bildet ein transparentes Element. Die Schicht 88 ist eine Metallschicht. Die Schicht 89 ist eine Klebeschicht.

Die Schichten 82, 83, 84, 85, 88 und 89 sind wie in den Ausführungsbeispielen nach den Figuren 3 und 4 beschrieben ausgestaltet und werden wie dort beschrieben auf dem Träger 81 aufgebracht.

Die Schicht 86 wird von einem transmissiven oder transparenten Material gebildet. Als Material für die Schicht 86 können beispielsweise Klarlack-Kompositionen, aber auch oxidisch, teilmetallisierte, streuende, transmissive organische oder anorganische Kompositionen verwendet werden. Die Schicht 86 wird beispielsweise durch ein Druckverfahren auf die Schicht 83 aufgetragen. Für das Aufbringen der partiellen Schicht 86 können weiter die in den Ausführungsbeispielen zu den Figuren 3 und 4 beschriebenen Verfahren verwendet werden.

Bei dem für die Schicht 86 verwendeten Material kann es sich auch um dasselbe Material wie das für die Distanzschicht 85 verwendete Material handeln.

Fig. 5b zeigt einen Träger 91, sieben Schichten 92, 93, 94, 95, 96, 98 und 99, diffraktive Strukturen 97 und mehrere Flächenbereiche 99a bis 99d. Die Schicht 92 ist eine Schutzlack- und/oder Ablöseschicht. Die Schicht 93 ist eine Replikationsschicht. Die Schicht 94 ist eine Absorptionsschicht. Die Schicht 96 bildet das partielle transparente Element. Die Schicht 98 ist eine Metallschicht. Die Schicht 99 ist eine Klebeschicht.

Die Schichten 92, 93, 94, 95, 98 und 99 sind wie in den Ausführungsbeispielen nach den Fig. 3 und 4 beschrieben ausgestaltet und werden wie dort beschrieben auf dem Träger 81 aufgebracht. Die Schicht 96 ist wie zu Fig. 5a ausgeführt ausgestallt.

Vor dem Auftragen der Schicht 94 und/ oder der Schicht 96 werden mittels eines Prägestempels oder einer der sonstigen oben beschriebenen Methoden die diffraktiven Strukturen 97 auf die Oberfläche der Schicht 93 aufgebracht. Wie aus Fig. 5b ersichtlich, können die diffraktiven Strukturen 97 hierbei sowohl in Flächenbereichen aufgebracht werden, die von dem partiellen transparenten Element bedeckt sind, als auch auf solche Flächenbereiche aufgebracht werden, die nicht von dem partiellen transparenten Element bedeckt sind.

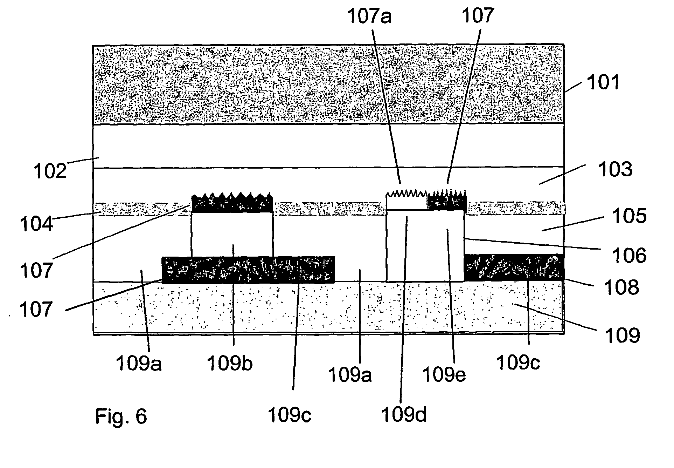

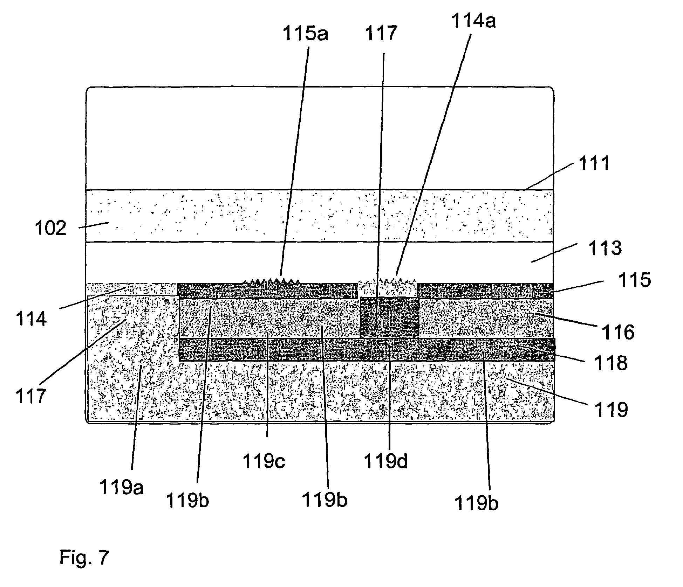

In den Fig. 6 und 7 sind einige Möglichkeiten aufgezeigt, ein partielles transparentes Element mit partiellen diffraktiven Strukturen, partiellen Dünnfilmelementen und partiellen reflektierenden Schichten zu kombinieren.

Fig. 6 zeigt einen Träger 101, neun Schichten 102 bis 109 und mehrere Flächenbereiche 109a bis 109d. Die Schicht 102 ist eine Schutzlack- und/oder Ablöseschicht. Die Schicht 103 ist eine Replikationsschicht. Die Schicht 104 ist eine Absorptionsschicht. Die Schichten 106 und 107a bilden ein partielles transparentes Element und die Schichten 106 und 107 bilden ein partielles reflektierendes Element. Die Schicht 108 ist eine Metallschicht. Die Schicht 109 ist eine Klebeschicht.

Die Schichten 102, 103, 104, 105, 108 und 109 sind wie zu den Fig. 3 und 4 beschrieben ausgestaltet und werden wie dort beschrieben auf dem Träger 101 aufgebracht.

Die Schicht 107 ist eine Metallschicht, die wie in den Ausführungsbeispielen zu Fig. 3 beschrieben aufgebaut werden kann. Die Schichten 106 und 107a werden von einem transmissiven Material gebildet. Sie werden wie in den Ausführungsbeispielen zu den Fig. 5a und 5b beschrieben aufgebaut.

Wie in Fig. 6 erkennbar, ist in den Flächenbereichen 109b, 109d und 109e weiter eine diffraktive Struktur auf der Schicht 103 aufgebracht.

Damit weist das in Fig. 6 dargestellte optisch variable Element in dem Flächenbereich 109d und unter Umständen in den Flächenbereichen109a (abhängig von der Schichtdicke der Schicht 108) ein partielles transparentes Element auf. In dem Flächenbereich 109c weist das optisch variable Element ein partielles Dünnfilmelement auf. In dem Flächenbereich 109b und 109e weist das optisch variable Element ein partielles reflektierendes Element auf.

Fig. 7 zeigt einen Träger 111, acht Schichten 112 bis 119 und mehrere Flächenbereiche 119a und 119b. Die Schicht 112 ist eine Schutzlack- und/oder Ablöseschicht. Die Schicht 113 ist eine Replikationsschicht. Die Schicht 114 ist eine Absorptionsschicht. Die Schicht 117 ist eine Distanzschicht. Die Schichten 116 ist ein Ätzresist. Die Schichten 115 und 1.18 sind Metallschichten. Die Schicht 119 ist eine Klebeschicht. Die Schicht 117a ist eine Füllschicht, die aus demselben Material wie die Klebeschicht 119 bestehen kann.

Die Schichten 112, 113, 114, 115, 116, 117, 118 und 119 sind wie in den Ausführungsbeispielen nach den Figuren 3 und 4 beschrieben ausgestaltet und werden wie dort beschrieben auf dem Träger 111 aufgebracht.

Wie in Fig. 8 erkennbar, ist in den Flächenbereichen 119c und 119d weiter eine diffraktive Struktur 115a bzw. 114a auf der Schicht 113 aufgebracht.

Damit weist das in Fig. 7 dargestellte optisch variable Element in dem Flächenbereich 119a ein partielles transparentes Element auf. In dem Flächenbereich 119d weist das optisch variable Element ein partielles Dünnfilmelement auf. In den Flächenbereichen 119b und 119c weist das optisch variable Element ein partielles reflektierendes Element auf.

Durch diese oben beschriebenen Verfahrensmöglichkeiten können eingepasserte Einzelelemente wie ein partielles transparentes Fenster, ein partielles Dünnfilmelement, eine partielle Strukturierung (z. B. diffraktive Strukturen) und eine partielle Metallisierung in einer Positioniergenauigkeit bis +/- 0,2 mm in jeder Ortskombination als zusammenhängende oder verlaufende Bildmuster erzeugt werden.

## Patentansprüche

1. Optisch variables Element in Form eines mehrschichtigen Folienkörpers, insbesonders optisch variables Sicherungselement zur Sicherung von Banknoten, Kreditkarten und dergleichen, wobei der mehrschichtige Folienkörper einen Dünnfilm mit einem Interferenzschichtenaufbau zur Erzeugung von Farbverschiebungen mittels Interferenz und/ oder eine metallisch reflektierende Schicht aufweist, wobei
das optisch variable Element ein transparentes Fenster aufweist und der Dünnfilm und/ oder die metallisch reflektierende Schicht jeweils als partielles Element, nämlich als partielles Dünnfilmelement bzw. als partielle reflektierende Schicht ausgebildet ist, **dadurch gekennzeichnet, dass** das oder die partiellen Elemente den Flächenbereich des transparenten Fensters umschließen.

2. Optisch variables Element nach Anspruch 1,
**dadurch gekennzeichnet,**
**dass** das transparente Fenster mit einer diffraktiven Struktur, insbesondere zur Erzeugung von Beugungseffekten, versehen ist.

3. Optisch variables Element nach Anspruch 1,
**dadurch gekennzeichnet,**
**dass** das optisch variable Element eine diffraktive Struktur aufweist, die sich sowohl über einen Flächenbereich des transparenten Fensters als auch über einen Flächenbereich des partiellen Dünnfilmelements und/ oder der partiellen reflektierenden Schicht erstreckt.

4. Optisch variables Element nach Anspruch 1,
**dadurch gekennzeichnet,**
**dass** ein Niveauunterschied zwischen dem transparenten Fenster und der partiellen reflektierenden Schicht und/ oder dem partiellen Dünnfilmelement besteht.

5. Optisch variables Element nach Anspruch 1,
**dadurch gekennzeichnet,**
**dass** das transparente Fenster ein partielles transparentes Element aufweist.

6. Optisch variables Element nach Anspruch 5,
**dadurch gekennzeichnet,**
**dass** das partielle transparente Element eine eingefärbte Transmissionsschicht aufweist.

7. Optisch variables Element nach Anspruch 5,
**dadurch gekennzeichnet,**
**dass** das partielle transparente Element streuende Eigenschaften hat.

8. Optisch variables Element nach Anspruch 5,
**dadurch gekennzeichnet,**
**dass** das partielle transparente Element eine Absorptionsschicht, aber keine Distanzschicht aufweist.

9. Optisch variables Element nach Anspruch 5,
**dadurch gekennzeichnet,**
**dass** das partielle transparente Element eine Distanzschicht, aber keine Absorptionsschicht aufweist.

10. Optisch variables Element nach Anspruch 1,
**dadurch gekennzeichnet,**
**dass** das partielle Dünnfilmelement eine Absorptionsschicht und eine Abstandsschicht aufweist.

11. Optisch variables Element nach Anspruch 1,
**dadurch gekennzeichnet,**
**dass** das partielle Dünnfilmelement mehrere Schichten unterschiedlicher Brechung aufweist.

12. Optisch variables Element nach Anspruch 1,
**dadurch gekennzeichnet,**
**dass** das partielle Dünnfilmelement eine transmissive Schicht aufweist.

13. Optisch variables Element nach Anspruch 1,
**dadurch gekennzeichnet,**
**dass** das partielle Dünnfilmelement eine reflektierende Schicht, insbesondere eine Metallschicht, aufweist.

14. Optisch variables Element nach Anspruch 1,
**dadurch gekennzeichnet,**
**dass** das partielle Dünnfilmelement eine partielle reflektierende Schicht, insbesondere eine Metallschicht, aufweist, die den Flächenbereich des partiellen Dünnfilmelements nur partiell abdeckt.

15. Optisch variables Element nach Anspruch 1,
**dadurch gekennzeichnet,**
**dass** das optisch variable Element eine Schutzlackschicht aufweist die sich über den Flächenbereich des transparenten Fensters sowie über den Flächenbereich des partiellen Dünnfilmelements und/ oder der partiellen reflektierenden Schicht erstreckt.

16. Optisch variables Element nach Anspruch 1,
**dadurch gekennzeichnet,**
**dass** das optisch variable Element eine Replizierschicht aufweist, die sich über den Flächenbereich des transparenten Fensters sowie über den Flächenbereich des partiellen Dünnfilmelements und/ oder der partiellen reflektierenden Schicht erstreckt.

17. Optisch variables Element nach Anspruch 1,
**dadurch gekennzeichnet,**
**dass** das optisch variable Element eine Klebeschicht aufweist, die sich über den Flächenbereich des transparenten Fensters sowie über den Flächenbereich des partiellen Dünnfilmelements und/ oder der partiellen reflektierenden Schicht erstreckt.

18. Sicherheitsprodukt mit einem optisch variablen Element nach einem der vorgehenden Ansprüche.

19. Folie, insbesondere Prägefolie oder Laminierfolie, mit einem optisch variablen Element nach einem der Ansprüche 1 bis 17.

## Claims

1. Optically variable element in the form of a multilayer film body, in particular an optically variable security element for securing banknotes, credit cards and the like, wherein the multilayer film body has a thin film with an interference layer structure for producing colour shifts using interference and/or a metallically reflective layer, wherein the optically variable element has a transparent window and the thin film and/or the metallically reflective layer is configured in each case as a partial element, specifically as a partial thin-film element or as a partial reflective layer, **characterized in that** the partial element(s) enclose the surface region of the transparent window.

2. Optically variable element according to Claim 1, **characterized in that** the transparent window is provided with a diffractive structure, in particular for producing diffraction effects.

3. Optically variable element according to Claim 1, **characterized in that** the optically variable element has a diffractive structure which extends both over a surface region of the transparent window and over a surface region of the partial thin-film element and/or of the partial reflective layer.

4. Optically variable element according to Claim 1, **characterized in that** there is a level difference between the transparent window and the partial reflective layer and/or the partial thin-film element.

5. Optically variable element according to Claim 1, **characterized in that** the transparent window has a partial transparent element.

6. Optically variable element according to Claim 5, **characterized in that** the partial transparent element has a coloured transmission layer.

7. Optically variable element according to Claim 5, **characterized in that** the partial transparent element has scattering properties.

8. Optically variable element according to Claim 5, **characterized in that** the partial transparent element has an absorption layer but no spacer layer.

9. Optically variable element according to Claim 5, **characterized in that** the partial transparent element has a spacer layer but no absorption layer.

10. Optically variable element according to Claim 1, **characterized in that** the partial thin-film element has an absorption layer and a spacing layer.

11. Optically variable element according to Claim 1, **characterized in that** the partial thin-film element has a plurality of layers with different refraction.

12. Optically variable element according to Claim 1, **characterized in that** the partial thin-film element has a transmissive layer.

13. Optically variable element according to Claim 1, **characterized in that** the partial thin-film element has a reflective layer, in particular a metal layer.

14. Optically variable element according to Claim 1, **characterized in that** the partial thin-film element has a partial reflective layer, in particular a metal layer, which only partially covers the surface region of the partial thin-film element.

15. Optically variable element according to Claim 1, **characterized in that** the optically variable element has a protective varnish layer, which extends over the surface region of the transparent window and also over the surface region of the partial thin-film element and/or of the partial reflective layer.

16. Optically variable element according to Claim 1, **characterized in that** the optically variable element has a replication layer, which extends over the surface region of the transparent window and also over the surface region of the partial thin-film element and/or of the partial reflective layer.

17. Optically variable element according to Claim 1, **characterized in that** the optically variable element has an adhesive layer, which extends over the surface region of the transparent window and also over the surface region of the partial thin-film element and/or of the partial reflective layer.

18. Security product having an optically variable element according to one of the preceding claims.

19. Film, in particular embossing film or laminating film, having an optically variable element according to one of Claims 1 to 17.

## Revendications

1. Elément optiquement variable sous la forme d'un corps multicouche sous forme de feuille, en particulier élément de sécurité optiquement variable servant à sécuriser des billets de banque, des cartes de crédit et similaires, le corps multicouche sous forme de feuille présentant un film mince comportant une structure en couches interférentielles servant à générer des distorsions de la couleur au moyen d'interférence et/ou comportant une couche réfléchissante métallique, l'élément optiquement variable présentant une fenêtre transparente et le film mince et/ou la couche réfléchissante métallique étant respectivement réalisés comme un élément partiel, à savoir comme un élément partiel de film mince ou comme une couche réfléchissante partielle, **caractérisé en ce que** le ou les éléments partiels entourent la zone de surface de la fenêtre transparente.

2. Elément optiquement variable selon la revendication 1,
**caractérisé en ce**
**que** la fenêtre transparente est pourvue d'une structure diffractive, servant en particulier à générer des effets de diffraction.

3. Elément optiquement variable selon la revendication 1,
**caractérisé en ce**
**que** l'élément optiquement variable présente une structure diffractive qui s'étend aussi bien au-dessus d'une zone de surface de la fenêtre transparente qu'au-dessus d'une zone de surface de l'élément partiel de film mince et/ou de la couche réfléchissante partielle.

4. Elément optiquement variable selon la revendication 1,
**caractérisé en ce**
**que** subsiste une différence de niveau entre la fenêtre transparente et la couche réfléchissante partielle et/ou l'élément partiel de film mince.

5. Elément optiquement variable selon la revendication 1,
**caractérisé en ce**
**que** la fenêtre transparente présente un élément transparent partiel.

6. Elément optiquement variable selon la revendication 5,
**caractérisé en ce**
**que** l'élément transparent partiel présente une couche de transmission imbibée d'encre.

7. Elément optiquement variable selon la revendication 5,
**caractérisé en ce**
**que** l'élément transparent partiel présente des propriétés dispersives.

8. Elément optiquement variable selon la revendication 5,
**caractérisé en ce**
**que** l'élément transparent partiel présente une couche d'absorption, mais pas de couche d'espacement.

9. Elément optiquement variable selon la revendication 5,
**caractérisé en ce**
**que** l'élément transparent partiel présente une couche d'espacement mais pas de couche d'absorption.

10. Elément optiquement variable selon la revendication 1,
**caractérisé en ce**
**que** l'élément partiel de film mince présente une couche d'absorption et une couche d'écartement.

11. Elément optiquement variable selon la revendication 1,
**caractérisé en ce**
**que** l'élément partiel de film mince présente plusieurs couches de réfraction différente.

12. Elément optiquement variable selon la revendication 1,
**caractérisé en ce**
**que** l'élément partiel de film mince présente une couche transmissive.

13. Elément optiquement variable selon la revendication 1,
**caractérisé en ce**
**que** l'élément partiel de film mince présente une couche réfléchissante, en particulier une couche métallique.

14. Elément optiquement variable selon la revendication 1,
**caractérisé en ce**
**que** l'élément partiel de film mince présente une couche réfléchissante partielle, en particulier une couche métallique qui recouvre seulement partiellement la zone de surface de l'élément partiel de film mince.

15. Elément optiquement variable selon la revendication 1,
**caractérisé en ce**
**que** l'élément optiquement variable présente une couche de vernis de protection qui s'étend au-dessus de la zone de surface de la fenêtre transparente ainsi qu'au-dessus de la zone de surface de l'élément partiel de film mince et/ou de la couche réfléchissante partielle.

16. Elément optiquement variable selon la revendication 1,
**caractérisé en ce**
**que** l'élément optiquement variable présente une couche de réplication qui s'étend au-dessus de la zone de surface de la fenêtre transparente ainsi qu'au-dessus de la zone de surface de l'élément partiel de film mince et/ou de la couche réfléchissante partielle.

17. Elément optiquement variable selon la revendication 1,
**caractérisé en ce**
**que** l'élément optiquement variable présente une couche adhésive qui s'étend au-dessus de la zone de surface de la fenêtre transparente ainsi qu'au-dessus de la zone de surface de l'élément partiel de film mince et/ou de la couche réfléchissante partielle.

18. Produit de sécurité comportant un élément optiquement variable selon l'une quelconque des revendications précédentes.

19. Feuille, en particulier feuille à marquer ou feuille à laminer, comportant un élément optiquement variable selon l'une quelconque des revendications 1 à 17.
